(19) Europäisches Patentamt
European Patent Office
Office européen des brevets

(11) **EP 1 826 535 B1**

(12) **EUROPEAN PATENT SPECIFICATION**

(45) Date of publication and mention
of the grant of the patent:
**24.02.2016 Bulletin 2016/08**

(21) Application number: **05816701.6**

(22) Date of filing: **13.12.2005**

(51) Int Cl.:
***G01D 5/244*** *(2006.01)*        ***G01D 5/36*** *(2006.01)*
***G01D 5/38*** *(2006.01)*        ***G01D 5/347*** *(2006.01)*

(86) International application number:
**PCT/JP2005/022876**

(87) International publication number:
**WO 2006/064801 (22.06.2006 Gazette 2006/25)**

(54) **PHOTOELECTRIC ENCODER**

FOTOELEKTRISCHER KODIERER

CODEUR PHOTOÉLECTRIQUE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **13.12.2004   JP 2004360089
10.05.2005   JP 2005137591
12.12.2005   JP 2005357658**

(43) Date of publication of application:
**29.08.2007   Bulletin 2007/35**

(60) Divisional application:
**12167432.9 / 2 489 989**

(73) Proprietor: **Nikon Corporation
Tokyo 108-6290 (JP)**

(72) Inventor: **IMAI, Toru,
NIKON CORPORATION IP Dept.
Tokyo,
100-8331 (JP)**

(74) Representative: **Ter Meer Steinmeister & Partner
Patentanwälte mbB
Artur-Ladebeck-Strasse 51
33617 Bielefeld (DE)**

(56) References cited:
**JP-A- 06 194 124        JP-A- 57 203 905
JP-A- 2002 243 503    US-A- 3 756 723
US-B1- 6 639 686**

**Description**

TECHNICAL FIELD

The present invention relates to a photoelectric encoder.

BACKGROUND ART

A photoelectric encoder according to the preamble of claim 1 has been described in US 3 756 723 A. A similar photoelectric encoder is known from JP 2002 243503 A.

A photoelectric encoder, in which the displacement of a movable member is converted into a signal, is disclosed in Patent Document 1. In the case of the photoelectric encoder, illumination light beams are projected onto a movable grating or grid (reference numeral 15 shown in Fig. 1 of Patent Document 1) which is movable together with the movable member and an index grating or grid (reference numeral 14 shown in Fig. 1 of Patent Document 1) which is fixed. The intensities of the illumination light beams transmitted through the both gratings are detected by a light-receiving element (reference numeral 16 shown in Fig. 1 of Patent Document 1) as the information to indicate the amount of discrepancy between the both gratings. The output signal from the light-receiving element is periodically changed in accordance with the movement of the movable grating. Accordingly, it is possible to detect the minute displacement (moving) amount of the movable member from the intensity of the signal.

In general, the following artifice is applied to the photoelectric encoder of this type. That is, the intensities of the respective illumination light beams individually transmitted through the respective areas on the movable grating and the index grating are individually detected by a plurality of light-receiving surfaces of the light-receiving element. Further, the arrangements of the grating patterns of the movable grating and the index grating are designed so that the discrepancy amount between the gratings is deviated little by little between the areas. In this case, the output signals from the respective light-receiving surfaces are periodically changed respectively at mutually different phases in accordance with the movement of the movable member. Therefore, it is possible to detect the amount of movement and the direction of movement (i.e., the displacement) of the movable member according to the intensities of the signals.

Patent Document 1: Japanese Patent Application Laid-open No. 2002-243503

DISCLOSURE OF THE INVENTION

Problem to be Solved by the Invention:

However, in this photoelectric encoder, the illumination light beams, which are transmitted through the mutually different areas on the movable grating, are used in order to generate the signals which have the mutually different phases. Therefore, when the posture or attitude of the movable grating is fluctuated, the following problem arises. That is, the phase relationship between the signals is fluctuated, and thus the accuracy of detection of the displacement is deteriorated. Accordingly, an object of the present invention is to provide a photoelectric encoder which makes it possible to correctly generate a signal which represents the displacement of a movable member even when any posture fluctuation arises in the grating.

Means for Solving the Problem:

According to the present invention, there is provided a photoelectric encoder having the features specified in any of the independent claims 1, 11, and 12. In the photoelectric encoder according to the invention, the modulator may periodically change a position of the index grating. The modulator may periodically change an angle of the illumination light beam radiated from the light source into one of the index grating and the movable grating.

The light source may be capable of radiating the illumination light beam as a plurality of illumination light beams having mutually different angles, and the modulator may periodically switch the plurality of illumination light beams. In the photoelectric encoder described above, each of the movable grating and the index grating may be a diffraction grating, and an optical system may be arranged to form a grating image of the index grating on the movable grating by a pair of diffracted light beams generated by the index grating.

The modulator may periodically change a position of one of a projection image and a grating image of the index grating on the movable grating. The optical system may include a reflection member which deflects the pair of diffracted light beams respectively so as to overlay the pair of diffracted light beams in a same area on the movable grating. The modulator may periodically change a phase difference between the pair of diffracted light beams. The modulator may perform periodic change of the light with a waveform in which rising and falling are symmetrical with each other; and the displacement detector may extract, as a signal of the displacement, a specified frequency component of time-dependent change of an intensity of the illumination light beam received by the light-receiver.

The modulator may perform periodic change of the light with a waveform in which rising and falling are asymmetrical with each other; and the displacement detector may extract, as a signal of the displacement, a phase of time-dependent change of an intensity of the illumination light beam received by the light-receiver. The displacement detector may further include a control unit which generates a signal of an amplitude of periodic change of the light together with a signal of the displacement and which monitors the signal of the amplitude and controls the modulator to make the signal of the amplitude to be constant.

The displacement detector may further include a control unit which generates a signal of a light amount of the illumination light beam together with a signal of the displacement and which monitors the signal of the light amount and controls the light source to make the signal of the light amount to be constant.

In the photoelectric encoders according to the present invention, the modulator may be an actuator which fluctuates one of the index grating and the illumination light beam which comes into the index grating. The light source may be a point light source array, and the modulator may drive point light sources of the point light source array. The index grating may be irradiated with the illumination light beam to form one of a projection image and a grating image of the index grating on the movable grating.

Effect of the Invention:

According to the present invention, the photoelectric encoder is realized, which makes it possible to reliably generate the signal representing the displacement of the movable member even when any posture fluctuation arises in the grating.

BRIEF DESCRIPTION OF THE DRAWINGS

Fig. 1 shows a construction of an encoder according to a first embodiment.
Fig. 2 shows a relationship between modulation factor 2d and Bessel expansion coefficient $J_n$ (n = 1, 2,...).
Figs. 3(a) to 3(e) show time-dependent change waveforms of an interference signal I when a displacement, x of a movable diffraction grating 15 of the first embodiment has respective values.
Fig. 4 conceptually shows an extraction operation performed by a 1st-order component detection circuit 22 and a 2nd-order component detection circuit 23.
Figs. 5(a) and 5(b) illustrate an encoder according to a second embodiment.
Fig. 6 shows a construction of an encoder according to a third embodiment.
Figs. 7(a) to 7(c) show time-dependent change waveforms of the interference signal I when a displacement x of a movable diffraction grating 15 of the third embodiment has respective values.
Fig. 8 shows an unclaimed modification of the encoder according to the first embodiment or the third embodiment.
Fig. 9 illustrates an encoder according to a fourth embodiment.
Fig. 10 illustrates an encoder according to a fifth embodiment.
Figs. 11(a) and 11(b) illustrate a method for realizing various modulation waveforms in the encoder according to the fifth embodiment.

Legends of Reference Numerals:

11: light source, 11': point light source array, 12: collimator lens, 13: index diffraction grating, 13': index grating, 14A, 14B: mirror, 15: movable diffraction grating, 15': movable grating, 16: light-receiving element, 17: actuator, 21: light-receiving circuit, 22: 1st-order component detection circuit, 23: 2nd-order component detection circuit, 24: 3rd-order component detection circuit, 25: 4th-order component detection circuit, 26: clock circuit, 30: light source driving circuit, 31: zero-order component detection circuit, 32: light amount control circuit, 40: sawtooth wave-generating circuit.

BEST MODE FOR CARRYING OUT THE INVENTION

First Embodiment

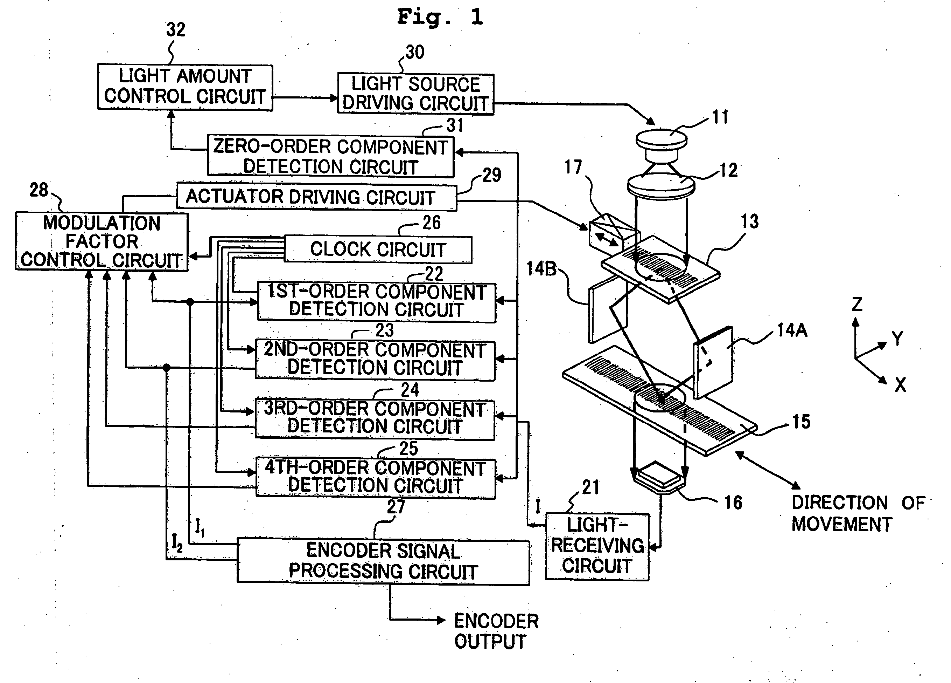

A first embodiment will be explained below. This embodiment is directed to a photoelectric linear encoder of the diffracted light interference system. At first, a construction of the encoder of this embodiment will be explained. Fig. 1 shows the construction of this encoder. An optical system part (component) of the encoder of this embodiment includes, for example, a light source 11, a collimator lens 12, an index diffraction grating 13 as a reference member, mirrors 14A, 14B, a movable diffraction grating 15 as a scale, and a light-receiving element 16. The index diffraction grating 13 functions as an optical separator element which separates or divides the light beam radiated from the light source 11 into a plurality of light beams. The optical system part of the encoder of this embodiment is provided with an actuator 17 for vibrating the index diffraction grating 13. The index diffraction grating 13 is vibrated in the direction which is perpendicular to the grating lines and which is parallel to the surface, of the index diffraction grating 13, on which the grating is formed.

The light source 11 is a laser light source which emits or radiates, for example, a laser beam having a wavelength $\lambda$ = 850 nm. The index diffraction grating 13 and the movable diffraction grating 15 are transmission type diffraction gratings, which are, for example, phase type diffraction gratings. The grating pitch p of the index diffraction grating 13 is mutually the same as that of the movable diffraction grating 15, which is set to be not more than 50 $\mu$m, for example, about 8 $\mu$m. The actuator 17, which functions as a modulator, is constructed of, for example, a piezoelectric element. The actuator 17 is capable of making vibration at a vibration width or amplitude of several $\mu$m and a frequency of about 20 to 30 kHz.

In particular, the mutual positions of the light source 11, the collimator lens 12, the mirrors 14A, 14B, the light-receiving element 16, and the actuator 17 are fixed. On the contrary, the movable diffraction grating 15 is displaced together with an unillustrated movable member (measurement objective). The direction of the displacement is parallel to the surface of the movable diffraction grating 15 on which the grating is formed, and is perpendicular to the grating lines. Fig. 1 shows an XYZ rectangular coordinate system of the right-handed scale in which the X direction is the direction of movement of the movable diffraction grating 15, the Y direction is the grating line direction of the movable diffraction grating 15, and Z direction is the normal line direction of the movable diffraction grating 15. The following explanation will be made as based on the use of the rectangular coordinate system, if necessary.

Other than the above, the encoder of this embodiment has a circuit part (component) which includes, for example, a light-receiving circuit 21, a 1st-order component detection circuit 22, a 2nd-order component detection circuit 23, a 3rd-order component detection circuit 24, a 4th-order component detection circuit 25, a clock circuit 26, an encoder signal processing circuit 27, a modulation factor control circuit 28, an actuator driving circuit 29, a light source driving circuit 30, a zero-order component detection circuit 31, and a light amount control circuit 32.

Next, the operation of the optical system part of the encoder of this embodiment will be explained. The light source 11 emits the illumination light beam. The illumination light beam is converted into a parallel light beam by the collimator lens 12, then is allowed to come into the index diffraction grating 13 to brought about the diffracted light beams of the respective orders in accordance with the diffracting function of the index diffraction grating 13. The index diffraction grating 13 generates the $\pm$1st-order diffracted light beams on the basis of the light beam allowed to come thereinto. The index diffraction grating 13 is formed with the diffraction grating of the phase type which does not generate any light beam other than the $\pm$1st-order diffracted light beams, for example, the zero-order light beam, the $\pm$2nd-order diffracted light beams, and the higher-order diffracted light beams or which generates the zero-order light beam, the $\pm$2nd-order diffracted light beams, and the higher-order diffracted light beams which are extremely weak as compared with the intensities of the $\pm$1st-order diffracted light beams. The $\pm$1st-order diffracted light beams, which are generated by the index diffraction grating 13, are individually deflected by the mirrors 14A, 14B, and then they are overlaid or superimposed in a same area of the movable diffraction grating 15 to form a grating image of the index diffraction grating 13 in this area. That is, the $\pm$1st-order diffracted light beams come into the same position of the movable diffraction grating 15. The $\pm$1st-order diffracted light beams,'which are allowed to come into this position, are further diffracted again by the diffracting function of the movable diffraction grating 15 to come into the light-receiving element 16 in a state of being interfered with each other. The light-receiving element 16 outputs a signal (hereinafter referred to as "interference signal I") which indicates the interference intensity of the interference light beam allowed to pass through the movable diffraction grating 15.

In the encoder of this embodiment as described above, the actuator 17 is driven during the period in which the movable diffraction grating 15 is displaced with respect to the index diffraction grating 13. When the actuator 17 is driven, then the position of the index diffraction grating 13 is periodically modulated in the X direction, and the phase difference between the $\pm$1st-order diffracted light beams is periodically modulated. When the phase difference is periodically modulated, the phase of the grating image on the movable diffraction grating 15 is periodically modulated (and hence the bright/dark pattern of the grating image is periodically modulated in the X direction). Therefore, the interference signal I is changed in a time-dependent manner. This will be explained in detail below.

At first, a situation is assumed, in which the actuator 17 is not driven. In this situation, it is assumed that x represents the displacement of the movable diffraction grating 15 in the X direction on the basis of the index diffraction grating 13. On this assumption, the complex amplitude $I_+$ of the +1st-order diffracted light beam incoming into the light-receiving element 16 and the complex amplitude I- of the -1st-order diffracted light beam are represented by the following expressions (1) and (2). In this case, the light amount (amplitude) of the illumination light beam of each of the diffracted light beams is expressed by being normalized to 1. The symbol "j" indicates the unit complex number.

$$I_+ = \exp[2j\pi x/p] \qquad \ldots (1)$$

$$I_- = \exp[-2j\pi x/p] \qquad \ldots (2)$$

Therefore, the interference signal I is represented by the function of the displacement x of the movable diffraction grating 15 as represented by the following expression (3).

$$I = (1/2) \bullet |\exp[2j\pi x/p] + \exp[-2j\pi x/p]|^2 \qquad \ldots (3)$$

Next, a situation is assumed, in which the actuator 17 is driven. In this situation, the index diffraction grating 13 is vibrated (periodically modulated) in the X direction on the basis of a predetermined position. The waveform (hereinafter referred to as "modulation waveform") of the position of the index diffraction grating 13, which is changed in a time-dependent manner during the modulation, is a sine wave ($\sin \omega t$) having an angular frequency $\omega$ and an amplitude $\varepsilon$ (half amplitude: $\varepsilon/2$). In the following description, the modulation factor $2d = 2\pi\varepsilon/p$ is defined as an index to indicate the wideness of the amplitude $\varepsilon$ on the basis of the grating pitch p. According to the periodical modulation as described above, the phase of the +1st-order diffracted light beam and the phase of the -1st-order diffracted light beam are subjected to the modulation in the mutually opposite directions. In other words, the phase difference between the +1st-order diffracted light beam and the -1st-order diffracted light beam is modulated.

Therefore, in the encoder of this embodiment, the complex amplitude $I_+$ of the +1st-order diffracted light beam and the complex amplitude $I_-$ of the -1st-order diffracted light beam are represented by the following expressions (4) and (5).

$$I_+ = \exp[2j\pi x/p - j\pi\varepsilon/p \bullet \sin(\omega t)] \qquad \ldots (4)$$

$$I_- = \exp[-2j\pi x/p + j\pi\varepsilon/p \bullet \sin(\omega t)] \qquad \ldots (5)$$

The expressions (4) and (5) are represented by the following expressions (6) and (7) with the modulation factor $2d = 2\pi\varepsilon/p$.

$$I_+ = \exp[2j\pi x/p - jd \bullet \sin(\omega t)] \qquad \ldots (6)$$

$$I_- = \exp[-2j\pi x/p + jd \bullet \sin(\omega t)] \qquad \ldots (7)$$

Therefore, the interference signal I is represented by the function of the time t and the displacement x of the movable diffraction grating 15 as represented by the following expression (8).

$$\begin{aligned}
I &= (1/2) \bullet |\exp[2j\pi x/p - jd \bullet \sin(\omega t)] \\
&\quad + \exp[-2j\pi x/p + jd \bullet \sin(\omega t)]|^2 \\
&= 1 + \cos[4\pi x/p - 2d \bullet \sin(\omega t)] \\
&= 1 + \cos(4\pi x/p) \bullet \cos[2d \bullet \sin(\omega t)] \\
&\quad + \sin(4\pi x/p) \bullet \sin[2d \bullet \sin(\omega t)] \qquad \ldots (8)
\end{aligned}$$

When the expression (8) is arranged (subjected to the Bessel series expansion) in relation to the time t, the following expression (9) is obtained.

$$I = 1 + J_0(2d) \bullet \cos(4\pi x/p)$$
$$+ 2J_1(2d) \bullet \sin(4\pi x/p) \bullet \sin(\omega t)$$
$$+ 2J_2(2d) \bullet \cos(4\pi x/p) \bullet \cos(2\omega t)$$
$$+ 2J_3(2d) \bullet \sin(4\pi x/p) \bullet \sin(3\omega t)$$
$$+ 2J_4(2d) \bullet \cos(4\pi x/p) \bullet \cos(4\omega t)$$
$$+ \ldots \qquad \ldots (9)$$

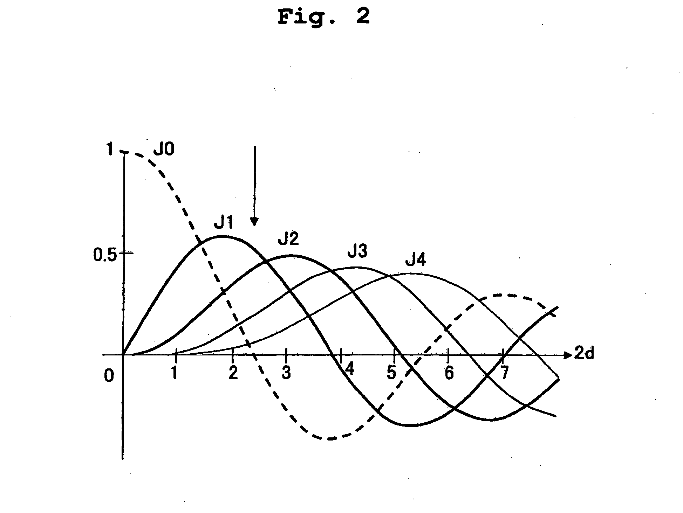

However, $J_n$ represents the nth-order Bessel expansion coefficient, which has a constant value provided that the modulation factor 2d is constant. Incidentally, the relationship between the modulation factor 2d and the Bessel expansion coefficient $J_n$ (n = 1, 2,...) is as shown in Fig. 2.

According to the expression (9), the zero-order component $I_0$, the 1st-order component $I_1$, the 2nd-order component $I_2$, the 3rd-order component $I_3$, and the 4th-order component $I_4$,... of the time-dependent change of the interference signal I are represented by the following expression (10) respectively. The zero-order component $I_0$ is the intensity of the frequency component which is not changed in the time-dependent manner. The nth-order component $I_n$ is the intensity of the frequency component which is changed in the time-dependent manner at the angular frequency $n\omega$.

$$I_0 = 1 + J_0(2d) \bullet \cos(4\pi x/p),$$
$$I_1 = 2J_1(2d) \bullet \sin(4\pi x/p),$$
$$I_2 = 2J_2(2d) \bullet \cos(4\pi x/p),$$
$$I_3 = 2J_3(2d) \bullet \sin(4\pi x/p),$$
$$I_4 = 2J_4(2d) \bullet \cos(4\pi x/p), \ldots \qquad \ldots (10)$$

Therefore, in the encoder of this embodiment, a specified frequency component (for example, 1st-order component $I_1$) and another specified frequency component (for example, 2nd-order component $I_2$) of the time-dependent change of the interference signal I can be used as the sine signal and the cosine signal to represent the displacement x at the phases shifted from each other by 90°. In other words, in the encoder of this embodiment, the interference signal I obtained from the light-receiving element 16 is changed in the time-dependent manner, although the encoder is provided with only one light-receiving element 16. Therefore, both of the sine signal and the cosine signal can be obtained from the time-dependent change.

Conventionally, distinct light-receiving elements have been separately used in order to obtain the sine signal and the cosine signal. Therefore, if the movable diffraction grating 15 is inclined, any discrepancy (factor of any measurement error) appears in the phase relationship between the sine signal and the cosine signal. On the contrary, in the encoder of this embodiment, the same light-receiving element 16 is used in order to obtain the sine signal and the cosine signal. Therefore, an effect is obtained such that any discrepancy (factor of any measurement error) does not appear in the phase relationship between the sine signal and the cosine signal even when the movable diffraction grating 15 is inclined.

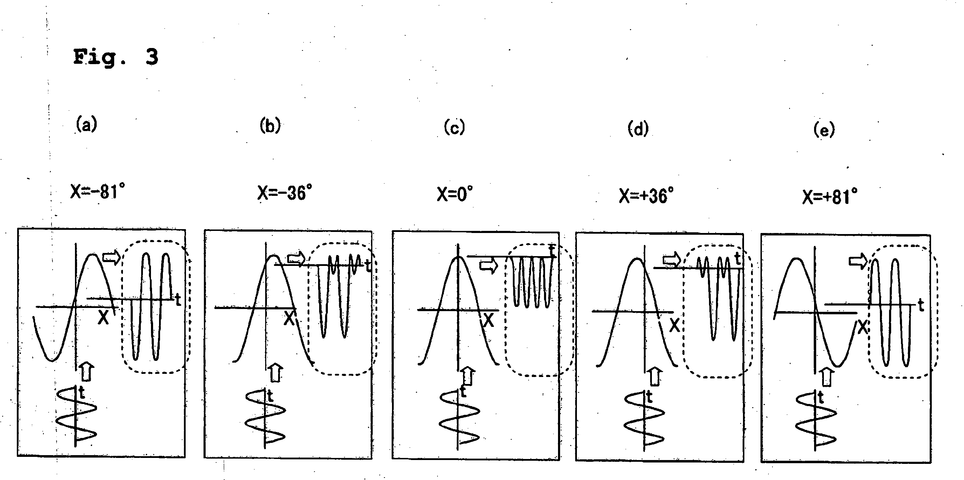

In the encoder of this embodiment, the waveforms of the interference signal I changed in the time-dependent manner, which are provided when the displacement x of the movable diffraction grating 15 has the respective values, are as shown in Fig. 3. The waveforms of the interference signal I changed in the time-dependent manner, which are provided when the displacement x of the movable diffraction grating 15 (angular expression of the displacement x) is - 81°, -36°, 0°, 36°, and 81°, are shown in frames depicted by dotted lines in Figs. 3(a), 3(b), 3(c), 3(d), and 3(e) respectively. Upper-left drawings of Figs. 3(a), 3(b), 3(c), 3(d), and 3(e) indicate the displacement of the movable diffraction grating 15 respectively; and lower drawings indicate modulation waveforms, i.e., waveforms of modulation to be applied to the index diffraction grating 13. Upper-right drawings surrounded by dotted lines indicate waveforms of the interference signal I obtained in the respective situations.

As appreciated from in Fig. 3, when the displacement x differs in the encoder of this embodiment, the intensity balance differs in relation to the respective frequency components contained in the waveform of the interference signal I changed in the time-dependent manner. In particular, when the displacement x is 0°, the intensity of the 2nd-order component $(\cos(2\omega t))$ is enhanced. Further, as the displacement x is larger in the plus direction, the intensity of the 1st-order component $(\sin(\omega t))$ is more enhanced. As the displacement x is larger in the minus direction, the intensity of the 1st-order component $(-\sin(\omega t))$ is more enhanced.

Incidentally, the waveform (upper-right part of Fig. 3(a)) of the interference signal I changed in the time-dependent manner, which is provided when the displacement x is -81°, amounts to the waveform formed by superimposing the modulation waveform (lower-left part of Fig. 3(a)) at the position of x = -81° with respect to the waveform brought about by the displacement x of the interference signal I during the period of no modulation (upper-left part of Fig. 3(a)). On the other hand, the waveform (upper-right part of Fig. 3(b)) of the interference signal I changed in the time-dependent manner, which is provided when the displacement x is -36°, amounts to the waveform formed by superimposing the modulation waveform (lower-left part of Fig. 3(b)) at the position of x = -36° with respect to the waveform brought about by the displacement x of the interference signal I during the period of no modulation (upper-left part of Fig. 3(b)).

Further, the waveform (upper-right part of Fig. 3(c)) of the interference signal I changed in the time-dependent manner, which is provided when the displacement x is 0°, amounts to the waveform formed by superimposing the modulation waveform (lower-left part of Fig. 3(c)) at the position of x = 0° with respect to the waveform brought about by the displacement x of the interference signal I during the period of no modulation (upper-left part of Fig. 3(c)). On the other hand, the waveform (upper-right part of Fig. 3(d)) of the interference signal I changed in the time-dependent manner, which is provided when the displacement x is +36° amounts to the waveform formed by superimposing the modulation waveform (lower-left part of Fig. 3(d)) at the position of x = +36° with respect to the waveform brought about by the displacement x of the interference signal I during the period of no modulation (upper-left part of Fig. 3(d)).

Further, the waveform (upper-right part of Fig. 3(e)) of the interference signal I changed in the time-dependent manner, which is provided when the displacement x is +81°, amounts to the waveform formed by superimposing the modulation waveform (lower-left part Of Fig. 3(e)) at the position of x = +81° with respect to the waveform brought about by the displacement x of the interference signal I during the period of no modulation (upper-left part of Fig. 3(e)).

Next, the operation of the circuit part of the encoder of this embodiment will be explained. The light amount control circuit 32 drives and controls the light source 11 by the aid of the light source driving circuit 30. This control is performed so that the light amount of the illumination light beam is maintained to be constant.

The modulation factor control circuit (control unit) 28 provides a modulation signal composed of the sine wave to the actuator driving circuit 29 in accordance with the sine wave signal $(\sin\omega t)$ having the angular frequency $\omega$ fed from the clock circuit 26 so as to drive and control the actuator 17. Accordingly, the position of the index diffraction grating 13 in the X direction is periodically modulated. In this control, the control is also performed so that the modulation factor 2d of the periodic modulation is maintained to have a constant value. The target value of the modulation factor 2d is set to "2.3". On this condition, the Bessel expansion coefficient "$J_0$" is 0 as shown by an arrow in Fig. 2.

The light-receiving circuit 21 continuously drives the light-receiving element 16. Further, the light-receiving circuit 21 continuously incorporates the interference signal I, which is outputted from the light-receiving element 16, to feed the interference signal I to the zero-order component detection circuit 31, the 1st-order component detection circuit 22, the 2nd-order component detection circuit 23, the 3rd-order component detection circuit 24, and the 4th-order component detection circuit 25 respectively. At least two of the detection circuits function as the units for detecting the displacement of the movable diffraction grating 15. The zero-order component detection circuit 31 extracts the zero-order component $I_0$ from the time-dependent change of the interference signal I which has been fed to the zero-order component detection circuit 31. The 1st-order component detection circuit 22 extracts the 1st-order component $I_1$ from the time-dependent change of the interference signal I. The 2nd-order component detection circuit 23 extracts the 2nd-order component $I_2$ from the time-dependent change of the interference signal I. The 3rd-order component detection circuit 24 extracts the 3rd-order component $I_3$ from the time-dependent change of the interference signal I. The 4th-order component detection circuit 25 extracts the 4th-order component $I_4$ from the time-dependent change of the interference signal I.

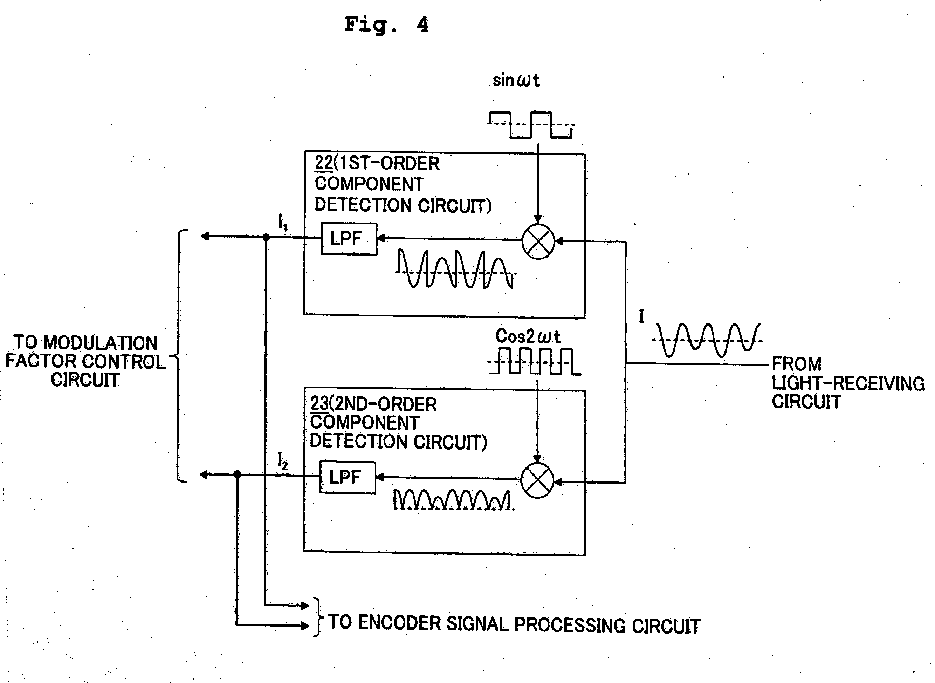

In particular, the extraction operation, which is performed by the 1st-order component detection circuit 22, the 2nd-order component detection circuit 23, the 3rd-order component detection circuit 24, and the 4th-order component detection circuit 25, is based on the synchronous detection or demodulation synchronized with the pulse signal fed from the clock circuit 26. Fig. 4 shows the concept of the extraction operation performed by the 1st-order component detection circuit 22 and the 2nd-order component detection circuit 23 which represent the circuits as described above. As shown in Fig. 4, a pulse signal having an angular frequency $\omega$ fed from the clock circuit 26 (shown as "sin$\omega$t" in Fig. 4) is inputted into the 1st-order component detection circuit 22. The 1st-order component detection circuit 22 combines the pulse signal with the interference signal I fed from the light-receiving circuit 21. The combined signal is smoothened by a low pass filter (LPF) to extract the 1st-order component $I_1$.

On the other hand, a pulse signal (shown as "cos2$\omega$t" in Fig. 4), which has an angular frequency 2$\omega$ and which has a phase deviated by 90° from the phase of the pulse signal described above, is inputted into the 2nd-order component detection circuit 23 from the clock circuit 26. The 2nd-order component detection circuit 23 combines the pulse signal with the interference signal I fed from the light-receiving circuit 21. The combined signal is smoothened by a low pass filter (LPF) to extract the 2nd-order component $I_2$. The encoder signal processing circuit 27 shown in Fig. 1 incorporates the extracted 1st-order component $I_1$ and the 2nd-order component $I_2$, and generates the sine signal Ss which indicates the value of $\sin(4\pi x/p)$ and the cosine signal Sc which indicates the value of $\cos(4\pi x/p)$, on the basis of the components $I_1$, $I_2$, the Bessel expansion coefficients $J_1$, $J_2$ (constants), and the expression (10). The sine signal Ss and the cosine signal Sc are generated by the interference signal I obtained from the same light-receiving element 16 (generated by the illumination light beams allowed to pass through the identical area of the movable diffraction grating 15). Therefore, even if the posture of the movable diffraction grating 15 is fluctuated, the positional relationship between the both is not fluctuated.

The modulation factor control circuit 28 incorporates the extracted 1st-order component $I_1$, the 2nd-order component $I_2$, the 3rd-order component $I_3$, and the 4th-order component $I_4$ to monitor the modulation factor 2d of the periodic modulation actually performed in the encoder of this embodiment (i.e., the actually measured value of the modulation factor 2d) on the basis of the components $I_1$, $I_2$, $I_3$, $I_4$ and the expression (10) (the modulation factor 2d is represented by "$I_1/I_3$", "$I_2/I_4$"). Further, the modulation factor control circuit 28 controls the actuator driving circuit 29 in the direction in which the monitored modulation factor 2d approaches the target value "2.3" described above. Accordingly, the modulation factor 2d is maintained to have the constant value (2.3) (subjected to the feedback control).

The light amount control circuit 32 incorporates the extracted zero-order component $I_0$ to control the light source driving circuit 30 in the direction in which the fluctuation of the zero-order component $I_0$ is suppressed. Accordingly, the light amount of the illumination light beam is maintained to have the constant value (subjected to the feedback control). The reason, why the light amount can be controlled with ease, is that the target value of the modulation factor 2d is "2.3". When the modulation factor 2d is "2.3", then the Bessel expansion coefficient $J_0 = 0$ is given, and the zero-order component $I_0$ indicates the light amount (amplitude) itself. According to the feedback control as described above, the measurement condition of the optical system part is maintained to be constant during the period in which the periodic modulation is effected. Therefore, it is possible to highly accurately detect the signal required for the encoder of this embodiment (i.e., the time-dependent change of the interference signal I). Therefore, the sine signal Ss and the cosine signal Sc described above, which are generated in the encoder of this embodiment, correctly represent the displacement x of the movable diffraction grating 15.

In this embodiment, the $\pm$1st-order diffracted light beams, which are generated by the index diffraction grating 13, are individually deflected by the mirrors 14A, 14B. However, in place of the mirrors 14A, 14B, it is also allowable to use, for example, an index diffraction grating having a grating pitch of 1/2 pitch with respect to the grating pitch of the index diffraction grating 13.

Second Embodiment

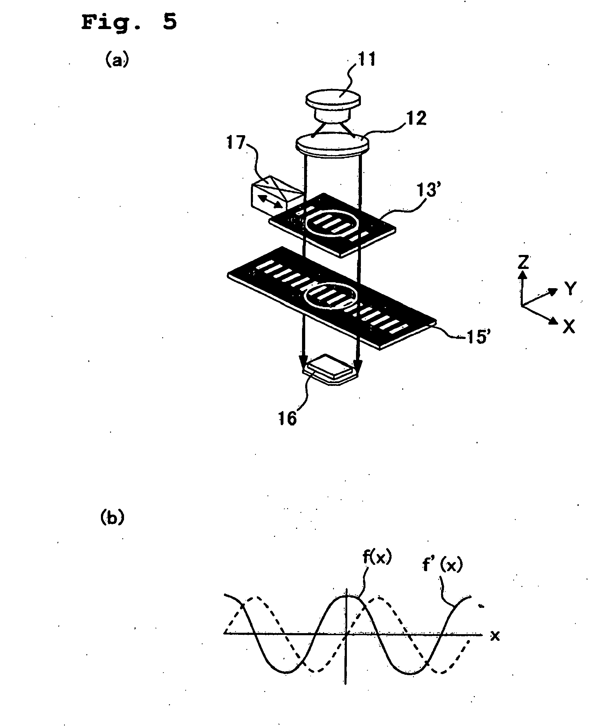

A second embodiment will be explained below. This embodiment relates to a photoelectric encoder of the shadowgraph system (slit shutter type). Only the difference from the first embodiment (Fig. 1) will be herein explained. The second embodiment differs from the first embodiment in the optical system part. Fig. 5(a) shows a construction of the optical system part of the encoder of this embodiment. As shown in Fig. 5(a), the optical system part of this encoder includes, for example, a light source 11, a collimator lens 12, an index grating 13', a movable grating 15', a light-receiving element 16, and an actuator 17 for vibrating the index grating 13'.
The position of the index grating 13' in the X direction is periodically modulated by using the same modulation waveform as that of the first embodiment.

However, the principle of the encoder of this embodiment is not based on the use of the interference function of the light. Therefore, it is enough that the image, which is formed on the movable grating 15', is not the grating image of the index grating 13', but the image is a simple projection image (so-called "shadow") of the index grating 13'. Therefore, it is unnecessary to provide the mirrors 14A, 14B for deflecting the pair of diffracted light beams. A light source, which has low coherence (for example, LED), can be used as the light source 11. Bright/dark gratings (gratings each formed of a light-shielding portion and a light-transmissive portion) having sufficiently large grating pitches are used as the index grating 13' and the movable grating 15'.

Next, the operation of the encoder of this embodiment will be explained. The illumination light beam, which is radiated from the light source 11, is converted into the parallel light beam by the collimator lens 12, The light beam is allowed to come into the index grating 13', and the light beam is transmitted through the bright portion of the grating. The illumination light beam, which is transmitted through the index grating 13', is allowed to come into the movable grating 15' to form the projection image of the index grating 13'. The illumination light beam, which is transmitted through both of the index grating 13' and the movable grating 15', is allowed to come into the light-receiving element 16. The light-receiving element 16 outputs a signal which indicates the incidence intensity of the illumination light beam (hereinafter referred to as "intensity signal f").

When the actuator 17 is driven in the above-described encoder of this embodiment, then the position of the index grating 13' is periodically modulated in the X direction, and the position of the projection image on the movable grating 15' is periodically modulated (and thus the bright/dark pattern of the projection image on the movable grating 15' is periodically modulated). Therefore, the intensity signal f fed from the light-receiving element 16 is changed in a time-dependent manner. In the case of the encoder of this embodiment, the intensity signal f is processed by an unillustrated circuit part in the same manner as the interference signal I of the first embodiment to extract, for example, the zero-order component $f_0$, the 1st-order component $f_1$, the 2nd-order component $f_2$,... of the interference signal I.

In the case of the encoder of this embodiment, it is assumed that x represents displacement of the movable grating 15' in the X direction on the basis of the index grating 13', and f(x) represents a waveform which is changed depending on the displacement x of the of the intensity signal f during no modulation. On this assumption, the time-dependent change of the intensity signal f during the periodic modulation is subjected to the Taylor expansion as represented by the following expression (11). The modulation waveform of the encoder of this embodiment is designated as $d\sin(\omega t)$.

$$f[x, \ d\sin(\omega t)]$$

$$= f(x) + f'(x) \bullet d \bullet \sin(\omega t) + f''(x)/2 \bullet d^2 \bullet \sin^2(\omega t) + ...$$

$$= f(x) + f'(x) \bullet d \bullet \sin(\omega t) + f''(x) \bullet d^2/4 \bullet [1 - \cos(2\omega t)] + ...$$

$$...(11)$$

According to the expression (11), it is appreciated that the intensity of the 1st-order component $f_1$ of the time-dependent change of the intensity signal f is proportional to f'(x), and the intensity of the 2nd-order component $f_2$ is proportional to f''(x).

If the waveform "f(x)", which is changed depending on the displacement x of the intensity signal f during no modulation, is represented by the trigonometric function (for example, the waveform "f(x)" is represented by f(x) = cos (x)), there are given f' (x) = sin(x), f'' (x) = -cos(x). Therefore, the time-dependent change of the intensity signal f of the encoder of this embodiment depicts a waveform which is the same as or equivalent to that of the time-dependent change of the interference signal I of the first embodiment. Accordingly, in the case of the encoder of this embodiment, the optical system part is designed, for example, such that the waveform "f (x) ", which is changed depending on the displacement x of the intensity signal f during no modulation, is designated as f(x) = sin (x) - 1/18•sin(3x) as the pseudo-sine signal.

On this condition, the 1st-order component $f_1$, which is extracted by the encoder of this embodiment, is as shown in Fig. 5(b). In Fig. 5(b), the waveform, which is changed depending on the displacement x of the intensity signal f during no modulation, is shown with the same coordinate together with the waveform which is changed depending on the displacement x of the 1st-order component $f_1$. Therefore, also in the encoder of this embodiment, the sine signal Ss and the cosine signal Sc, which correctly represent the displacement x at the mutually different phases, can be generated in the same manner as in the first embodiment.

In this embodiment, the light beam, which is transmitted through the index grating 13', is allowed to come into the movable grating 15'. However, it is also allowable that the index grating 13' is arranged at the downstream (below) of the movable grating 15', and the position of the index grating 13' is modulated with the actuator 17.

Third Embodiment

A third embodiment will be explained below. This embodiment relates to a photoelectric encoder of the diffraction interference system. Only the difference from the first embodiment (Fig. 1) will be herein explained. The third embodiment differs from the first embodiment in the circuit part.

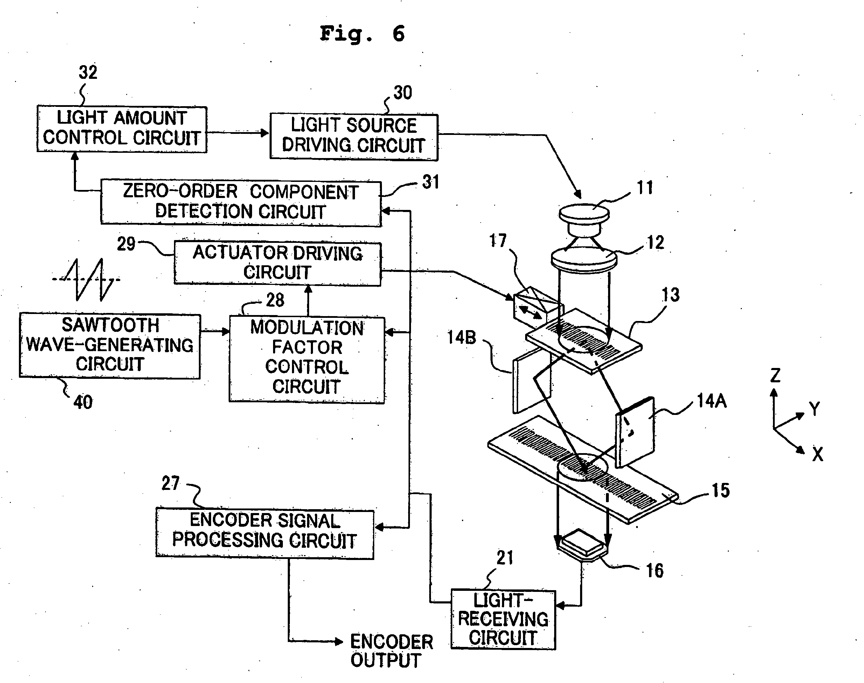

Fig. 6 shows a construction of the encoder of this embodiment. The clock circuit 26, the 1st-order component detection circuit 22, the 2nd-order component detection circuit 23, the 3rd-order component detection circuit 24, and the 4th-orther component detection circuit 25 are omitted from the circuit part of the encoder of this embodiment. Instead, a sawtooth wave-generating circuit 40 is provided. The modulation factor control circuit (control unit) 28 applies, to the actuator driving circuit 29, a modulation signal adapted to a signal fed from the sawtooth wave-generating circuit 40 to drive and control the actuator 17. Accordingly, the position of the index diffraction grating 13 in the X direction is periodically modulated with a sawtooth-shaped modulation waveform. The modulation factor 2d of the periodic modulation is set to $2\pi$.

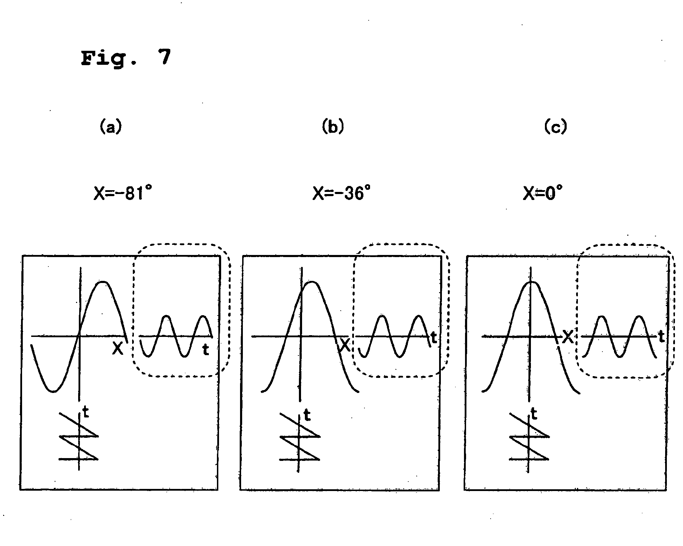

In the encoder of this embodiment constructed as described above, the waveforms of the interference signal I changed in the time-dependent manner, which are provided when the displacement x of the movable diffraction grating 15 have respective values, are as shown in Fig. 7. The waveforms of the interference signal I changed in the time-dependent manner, which are provided when the displacement x of the movable diffraction grating 15 (angular expression of the displacement x) is -81°, -36°, and 0°, are shown in frames depicted by dotted lines in Figs. 7(a), 7(b), and 7(c) respectively. Fig. 7 is depicted in accordance with the same illustration method as that of Fig. 3.

As appreciated from Fig. 7, in the case of the encoder of this embodiment, even when the displacement x has any value, the waveforms of the interference signal I changed in the time-dependent manner are identical with each other. When the displacement x differs, only the phase differs. The light-receiving circuit 21 shown in Fig. 6 continuously drives the light-receiving element 16. Further, the light-receiving circuit 21 continuously incorporates the interference signal I outputted from the light-receiving element 16, and the signal is fed to the encoder signal processing circuit 27, the modulation factor control circuit 28, and the zero-order component detection circuit 31 respectively.

The encoder signal processing circuit 27 extracts the phase of the waveform from the time-dependent change of the interference signal I which has been fed. The phase represents the displacement x of the movable diffraction grating 15 itself. The modulation factor control circuit 28 monitors the presence or absence of the point of inflection of the waveform from the time-dependent change of the fed interference signal I. The modulation factor control circuit 28 controls the actuator driving circuit 29 so that the point of inflection is reduced. Accordingly, the modulation factor 2d is maintained to have a constant value ($2\pi$) (subjected to the feedback control).

The zero-order component detection circuit 31 extracts the zero-order component $I_0$ from the time-dependent change of the fed interference signal I. The light amount control circuit 32 incorporates the zero-order component $I_0$ to control the light source driving circuit 30 in the direction in which the fluctuation of the zero-order component $I_0$ is suppressed. Accordingly, the light amount of the illumination light beam is maintained to have a constant value (subjected to the feedback control). As described above, according to the encoder of this embodiment, it is possible to obtain the effect which is the same as or equivalent to that of the first embodiment, although the encoder of this embodiment has the relatively simple circuit construction.

This embodiment is provided by changing the circuit part of the first embodiment. However, it is also allowable that the circuit part of the second embodiment is changed in the same manner as described above. In this embodiment, the modulation factor 2d is set to $2\pi$.

However, the same or equivalent effect can be obtained even when the modulation factor 2d is set to integral multiples of $2\pi$.

Other Embodiments

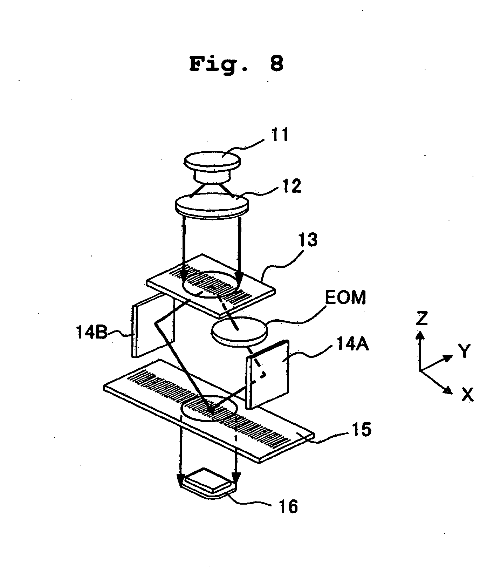

In the first embodiment or the third embodiment described above (encoder of the diffracted light beam interference system), the position of the index diffraction grating 13 is periodically modulated with the actuator 17 in order to periodically modulate the phase difference between the ±1st-order diffracted light beams (in order to periodically modulate the phase of the grating image). However, as shown in Fig. 8, the actuator 17 may be omitted, and an electrooptical modulator (EOM) or the like may be inserted into one of the optical paths for the ±1st-order diffracted light beams to periodically modulate the optical path length of one of the ±1st-order diffracted light beams. In this case, the electrooptical modulator corresponds to the modulator which periodically changes the light beam outgoing from the index grating. Also in this case, the phase difference between the ±1st-order diffracted light beams is periodically modulated. Therefore, the effect, which is the same as or equivalent to the effect of the embodiment described above, can be obtained.

In the first embodiment or the third embodiment, another not claimed method or another not claimed modulator may be adopted in order to periodically modulate the phase difference between the +1st-order diffracted light beam and the -1st-order diffracted light beam (in order to periodically modulate the phase of the grating image). For example, a not claimed method may be adopted, in which any difference is provided between the optical path length of the +1st-order diffracted light beam and the optical path length of the -1st-order diffracted light beam beforehand, and the wavelength of the light source 11 is periodically modulated. Although various methods are available to provide the difference between the optical path lengths of the two optical paths, a method may be adopted, for example, in which a plane-parallel plate is inserted into only one of the optical paths.

The synchronous detection or demodulation method is applied to the extraction operation using the 1st-order component detection circuit 22, the 2nd-order component detection circuit 23, the 3rd-order component detection circuit 24, and the 4th-order component detection circuit 25 of the first embodiment and the second embodiment. However, another method may be applied, which includes, for example, the amplitude measurement method such as the AC measurement and the amplitude measurement technique at a specified phase or a specified time. In the respective embodiments described above, the direction of modulation of the position of the index diffraction grating 13 (or the index grating 13') is coincident with the X direction (i.e., coincident with the direction of movement of the movable diffraction grating 15 or the movable grating 15'). However, any other direction may also be adopted provided that the direction has at least the component in the X direction. The same or equivalent effect is also obtained by periodically effecting the swinging movement of the index diffraction grating 13 (or the index grating 13') around a predetermined axis (for example, periodically effecting the rotational movement around an axis parallel to the Y axis), in place of the linear vibration of the index diffraction grating 13 (or the index grating 13').

In the encoder of the first embodiment or the second embodiment, the modulation waveform is set to the sine wave. However, it is also allowable to set another waveform in which the rising and the falling are symmetrical with each other. For example, it is also allowable to set, for example, a triangular wave. In the encoder of the third embodiment, the modulation waveform is set to have the sawtooth-shaped form. However, it is also allowable to set another waveform in which the rising and the falling are asymmetrical with each other.

Any artifice may be applied to the encoder according to any one of the embodiments described above in order to improve the detection accuracy of the displacement. For example, the following construction may also be adopted. That is, an optical system (fixed index grating for the correction purpose), which detects the center position (offset) of the periodic modulation, is added. An output signal of the optical system is applied to the modulation factor control circuit 28 so that the modulation factor control circuit 28 performs the control to maintain the offset to be constant.

A rotary encoder may be constructed by applying the linear encoder according to any one of the embodiments described above.

Fourth Embodiment

A fourth embodiment will be explained below. This embodiment relates to a photoelectric encoder of the diffracted light beam interference system. Only the difference from the first embodiment (Fig. 1) will be herein explained. The difference resides in the optical system part.

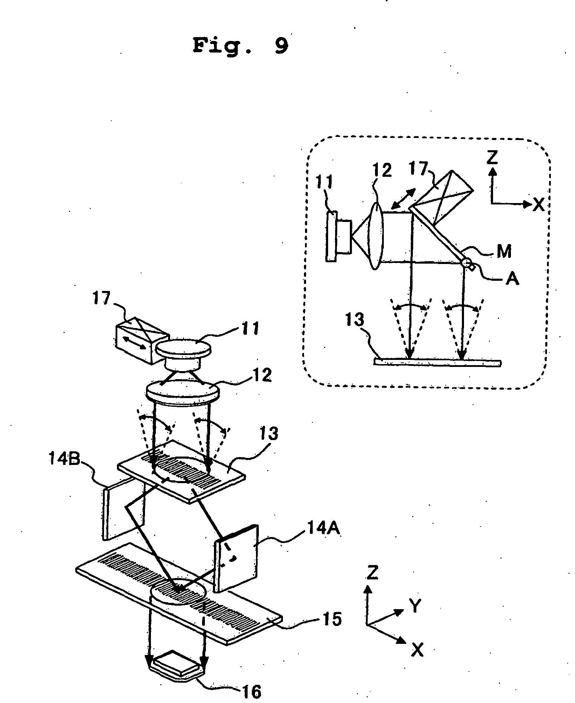

Fig. 9 shows a construction of the optical system part of the encoder of this embodiment. As shown in Fig. 9, an actuator 17, which serves as the modulator of the encoder of this embodiment, vibrates the light source 11 instead of the index diffraction grating 13. Owing to the vibration, the position of the light source 11 is periodically modulated in the X direction (= direction of movement of the movable diffraction grating 15) on the basis of a predetermined position in the same manner as the index diffraction grating 13 of the first embodiment. In this case, the angle of incidence of the illumination light beam allowed to come from the collimator lens 12 into the index diffraction grating 13 is periodically modulated in the direction indicated by the arrow shown in Fig. 9. The direction of modulation is about the axis which is parallel to the Y axis (= grating line direction).

When the angle of incidence is modulated in this direction, then the phase of the grating image on the movable diffraction grating 15 is modulated substantially in the same manner as in the first embodiment, and the interference signal I from the light-receiving element 16 is also changed in a time-dependent manner substantially in the same manner as in the first embodiment. Therefore, also in the encoder of this embodiment, it is possible to obtain the effect which is substantially the same as or equivalent to that of the first embodiment.

The feature of this embodiment is in the change of the optical system part of the first embodiment (diffracted light beam interference system). However, the same or equivalent change may be made for another embodiment (shadowgraph system) based on the different principle and for the optical system part of still another embodiment having the different circuit part.

In the case of the encoder based oh the shadowgraph system (Fig. 5), the image, which is formed on the movable grating 15', is not the grating image of the index grating 13', but the image is merely the projection image (shadow). However, when the angle of incidence of the illumination light beam is modulated in the same manner as in this embodiment, the position of the projection image is modulated. Therefore, the intensity signal f from the light-receiving element 16 can be changed in a time-dependent manner in the same manner as in the second embodiment. In this embodiment, the direction of modulation of the position of the light source 11 is coincident with the X direction (= moving direction of the movable diffraction grating 15). However, it is also allowable that the direction of modulation is not necessarily coincident with the X direction provided that the direction has at least the component in the X direction.

In this embodiment, the position of the light source 11 is subjected to the modulation. However, as shown in an upper-right frame depicted in Fig. 9, a bending mirror M may be arranged between the collimator lens 12 and the index diffraction grating 13. When the mirror M is subjected to the swinging movement in the direction of the arrow by using an actuator 17, the angle of incidence of the illumination light beam can be modulated in the same manner as described above. The support point of the swinging movement is Point A shown in Fig. 9. In this embodiment, the position of the light source 11 is subjected to the modulation. However, the light source 11 may be arranged at a position separated and away from the encoder. Further, when the light beam emitted from the light source 11 is guided with an optical fiber and the position of the outgoing end is modulated, the angle of incidence of the illumination light beam can be modulated in the same manner as described above. For example, a mirror, which is provided by coating a surface of a quartz crystal oscillator with a reflective film, may be used as the mirror M. The illumination light beam may be modulated by oscillating or vibrating the quartz crystal oscillator itself.

Fifth Embodiment

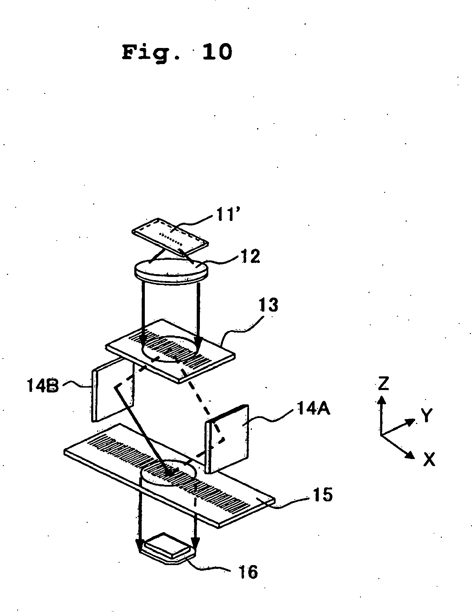

A fifth embodiment will be explained below. This embodiment relates to a photoelectric linear encoder of the diffracted light beam interference system. Only the difference from the first embodiment (Fig. 1) will be herein explained. The difference is in the optical system part. Fig. 10 shows a construction of the optical system part of the encoder of this embodiment. As shown in Fig. 10, the actuator 17 is omitted from the encoder of this embodiment, and a point light source array 11' is provided in place of the light source 11.

The point light source array 11' is a so-galled "surface light emission laser" constructed of a plurality of point light sources arranged in the X direction (= moving direction of the movable diffraction grating 15). The apparent arrangement pitch p' (arrangement pitch as viewed from the side of the index diffraction grating 13) of the plurality of point light sources is set to be sufficiently smaller than the grating pitch p. For example, the apparent arrangement pitch p' satisfies p' ≤ several $\mu$m with respect to p = 8 $\mu$m. The point light source array 11' is driven by an unillustrated light source driving circuit. The light source driving circuit switches the light source to be lighted (i.e., the lighting position) among the plurality of point light sources of the point light source array 11'. When the periodicity is provided for the time-dependent change pattern of the lighting position, the angle of incidence of the illumination light beam can be periodically modulated in the same manner as in the periodic modulation of the position of the light source 11 as performed in the fourth embodiment. Therefore, in this embodiment, the light source driving circuit functions as a modulator for periodically changing the light beam outgoing from the index grating.

The switching operation of the lighting position as described above can be performed at a higher velocity than the modulation of the position of any object. Therefore, in the encoder of this embodiment, the modulation frequency, which is provided upon the modulation, can be enhanced as compared with the frequency provided in the first embodiment. For example, it is possible to provide a frequency of MHz order. Therefore, in the encoder of this embodiment, it is possible to obtain the same effect as that of the first embodiment as well as the effect to shorten the time required to generate the signal, provided that the apparent arrangement pitch p' of the plurality of point light sources is set to be sufficiently small.

Further, in the encoder of this embodiment, the position of any object is not modulated. Therefore, even when the feedback control is not performed, unlike the first embodiment, it is possible to maintain, for example, the constant modulation factor 2d and the constant center position (offset) of the periodic modulation. Therefore, in the encoder of this embodiment, the circuit part can be simplified, while the same effect as that of the first embodiment is obtained. In the encoder of this embodiment, the posture of the point light source array 11' with respect to the collimator lens 12 may be inclined in order to set the apparent arrangement pitch p', of the plurality of point light sources, to be small.

In this embodiment, the optical system part of the first embodiment (diffraction interference system) is changed. However, the same or equivalent change may be made for another embodiment (shadowgraph system) based on the different principle and for the optical system part of still another embodiment having the different circuit part (i.e. different modulation waveform). A method for realizing various modulation waveforms in the encoder of this embodiment is, for example, as follows.

It is assumed that the number of the point light sources of the point light source array 11' is seven, and the positions of the seven point light sources are referred to as [1], [2], [3], [4], [5], [6], [7] in an order of arrangement. On this assumption, when the time-dependent change pattern of the lighting position is [1] → [2] → [3] → [4] → [5] → [6] → [7] → [1] → [2] → [3] → [4] → [5] → [6] → [7] → [1] → [2] → [3] → [4] → [5] → [6] → [7] → [1] →..., it is possible to realize a sawtooth-shaped modulation waveform.

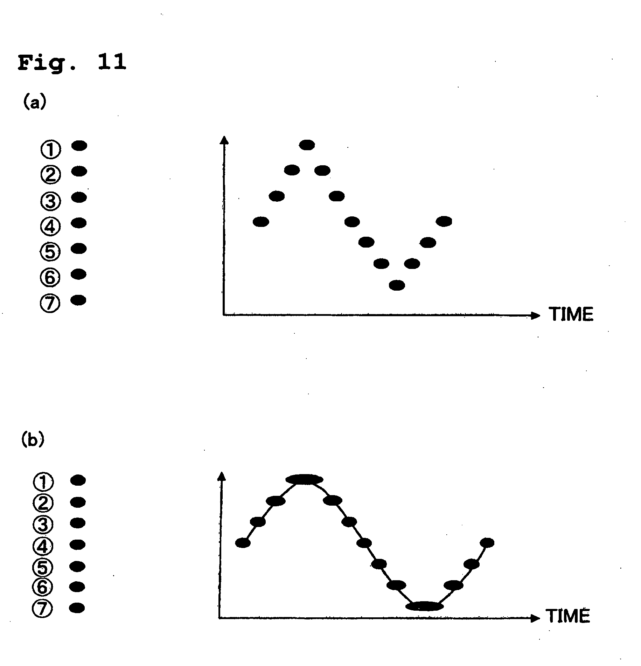

When a time-dependent change pattern ([4] → [3] → [2] → [1] → [2] → [3] → [4] → [5] → [6] → [7] → [6] → [5] → [4] →...) is adopted as shown in Fig. 11(a), it is possible to realize a triangular wave-shaped modulation waveform. When a time-dependent change pattern is adopted as shown in Fig. 11(b), it is possible to realize a sine wave-shaped modulation waveform. In the case of the time-dependent change pattern described above, the lighting time is made to differ depending on the lighting position. In Figs. 11(a) and 11(b), the horizontal axis represents the time, and vertical axis represents the lighting position (number of the point light source).

In the embodiments described above, the index diffraction grating 13 and the movable diffraction grating 15 are the phase gratings. However, the index diffraction grating 13 and the movable diffraction grating 15 may be diffraction gratings of the amplitude type.

The embodiments described above have been explained as exemplified by the transmissive type diffraction gratings. However, the movable diffraction grating 15 may be a diffraction grating of the reflection type. In this case, the light-receiving element 16 may be arranged on the side of the index diffraction grating 13.

In the embodiments described above, the arrangement relationship between the index diffraction grating 13 and the movable diffraction grating 15 may be reversed. That is, the diffraction grating, into which the illumination light beam radiated from the light source 11 is allowed to come, may be a movable diffraction grating; and the diffraction grating, into which the diffracted light beam generated by the diffraction grating is allowed to come, may be an index diffraction grating. That is, the light source 11, the collimator lens 12, the movable diffraction grating 15, the index diffraction grating 13, and the light-receiving element 16 may be arranged in this order.

It is not necessarily indispensable that the pitch of the index diffraction grating 13 is the same as that of the movable diffraction grating 15. That is, the index diffraction grating 13 and the movable diffraction grating 15 may have mutually different pitches. In this case, the direction, in which the diffracted light beams generated by the index diffraction grating 13 and the movable diffraction grating 15 outgo, is determined by the wavelength $\lambda$ of the light and the pitches thereof. Therefore, the mutual arrangement relationship concerning, for example, the light-receiving element 16 and the optical system between the index diffraction grating 13 and the movable diffraction grating 15 may be appropriately determined in accordance with the pitches of the respective diffraction gratings.

INDUSTRIAL APPLICABILITY

According to the present invention, the photoelectric encoder is realized, which makes it possible to correctly generate the signal indicating the displacement of the movable member even when the grating undergoes the posture fluctuation. Therefore, the photoelectric encoder is especially useful in various environments in which the posture fluctuation easily arises in the grating.

**Claims**

1. A photoelectric encoder comprising:

   a light source (11; 11') which radiates an illumination light beam;
   a movable grating (15; 15') which has grating lines and which is displaceable in a direction intersecting the grating lines;
   an index grating (13; 13') which serves as a reference for displacement of the movable grating;
   a light-receiver (16) which receives the illumination light beam via the movable grating (15; 15') and the index grating (13; 13');
   a modulator (17) which periodically changes a light outgoing from the index grating (13); and
   a displacement detector (22 - 25) which detects the displacement of the movable grating (15; 15') based on the illumination light beam received by the light-receiver (16),
   wherein the modulator (17) is arranged to periodically modulate a relative positional relationship between the index grating (13; 13') and the illumination light beam incoming into the index grating, **characterized in that** the modulator (17) periodically changes a position of the index grating (11).

2. The photoelectric encoder according to claim 1, wherein the modulator (17) periodically changes a position of one of a projection image and a grating image of the index grating (13; 13') on the movable grating (15; 15').

3. The photoelectric encoder according to claim 1, wherein each of the movable grating (15; 15') and the index grating (13; 13') is a diffraction grating, and an optical system is arranged to form a grating image of the index grating on the movable grating by a pair of diffracted light beams generated by the index grating.

4. The photoelectric encoder according to claim 3, wherein the optical system includes a reflection member (14A, 14B) which deflects the pair of diffracted light beams respectively so as to overlay the pair of diffracted light beams in a same area on the movable grating (15; 15').

5. The photoelectric encoder according to claim 1, wherein:

   the modulator (17) performs periodic change of the light with a waveform in which rising and falling are symmetrical with each other; and
   the displacement detector (22 - 25) extracts, as a signal of the displacement, a specified frequency component of time-dependent change of an intensity of the illumination light beam received by the light-receiver (16).

6. The photoelectric encoder according to claim 1, wherein:

   the modulator (17) performs periodic change of the light with a waveform in which rising and falling are asymmetrical with each other; and
   the displacement detector (22 - 25) extracts, as a signal of the displacement, a phase of time-dependent change of an intensity of the illumination light beam received by the light-receiver (16).

7. The photoelectric encoder according to claim 1, wherein the displacement detector (22 - 25) further includes a control unit which generates a signal of an amplitude of periodic change of the light together with a signal of the displacement and which monitors the signal of the amplitude and controls the modulator to make the signal of the amplitude to be constant.

8. The photoelectric encoder according to claim 1, wherein the displacement detector (22 - 25) further includes a control unit which generates a signal of a light amount of the illumination light beam together with a signal of the displacement and which monitors the signal of the light amount and controls the light source to make the signal of the light amount to be constant.

9. The photoelectric encoder according to claim 1, wherein the light-receiver (16) has a single light-receiving element.

10. A photoelectric encoder comprising:

    a light source (11; 11') which radiates an illumination light beam;
    a movable grating (15; 15') which has grating lines and which is displaceable in a direction intersecting the grating lines;
    an index grating (13; 13') which serves as a reference for displacement of the movable grating;
    a light-receiver (16) which receives the illumination light beam via the movable grating (15; 15') and the index grating (13; 13');
    a modulator (17) which periodically changes a light outgoing from the index grating (13); and
    a displacement detector (23-26) which detects the displacement of the movable grating (15; 15') based on the illumination light beam received by the light-receiver (16),
    **characterized in that** the modulator (17) has an actuator which actuates the light source (11; 11'), and the modulator (17) is arranged to periodically modulate a relative positional relationship between the index grating (13; 13') and the illumination light beam incoming into the index grating.

11. A photoelectric encoder comprising:

    a light source (11; 11') which radiates an illumination light beam;
    a movable grating (15; 15') which has grating lines and which is displaceable in a direction intersecting the grating lines;
    an index grating (13; 13') which serves as a reference for displacement of the movable grating;
    a light-receiver (16) which receives the illumination light beam via the movable grating (15; 15') and the index grating (13; 13');
    a modulator (17) which periodically changes a light outgoing from the index grating (13); and
    a displacement detector (23-26) which detects the displacement of the movable grating (15; 15') based on the illumination light beam received by the light-receiver (16),
    **characterized in that** the light source (11') has a point light source array, the modulator (17) drives the point light source array, and the modulator (17) is arranged to periodically modulate a relative positional relationship between the index grating (13; 13') and the illumination light beam incoming into the index grating.

12. The photoelectric encoder according to claim 10 or 11, wherein the modulator periodically changes an angle of the illumination light beam radiated from the light source (11; 11') into one of the index grating (13') and the movable grating (15').

13. The photoelectric encoder according to claim 12, wherein the light source (11') is capable of radiating the illumination light beam as a plurality of illumination light beams having mutually different angles, and the modulator periodically switches the plurality of illumination light beams.

14. The photoelectric encoder according to claim 10 or 11, wherein the modulator (17) periodically changes a position of one of a projection image and a grating image of the index grating (13; 13') on the movable grating (15; 15').

15. The photoelectric encoder according to claim 10 or 11, wherein each of the movable grating (15; 15') and the index grating (13; 13') is a diffraction grating, and an optical system is arranged to form a grating image of the index grating on the movable grating by a pair of diffracted light beams generated by the index grating.

16. The photoelectric encoder according to claim 15, wherein the optical system includes a reflection member (14A; 14B) which deflects the pair of diffracted light beams respectively so as to overlay the pair of diffracted light beams in a same area on the movable grating (15; 15').

17. The photoelectric encoder according to claim 15 or 16, wherein the modulator (17) periodically changes a phase difference between the pair of diffracted light beams.

18. The photoelectric encoder according to claim 10 or 11, wherein:

the modulator (17) performs periodic change of the light with a waveform in which rising and falling are symmetrical with each other; and
the displacement detector (22-25) extracts, as a signal of the displacement, a specified,frequency component of time-dependent change of an intensity of the illumination light beam received by the light-receiver (16).

19. The photoelectric encoder according to claim 10 or 11, wherein:

the modulator (17) performs periodic change of the light with a waveform in which rising and falling are asymmetrical with each other; and
the displacement detector (22-25) extracts, as a signal of the displacement, a phase of time-dependent change of an intensity of the illumination light beam received by the light-receiver (16).

20. The photoelectric encoder according to claim 10 or 11, wherein the displacement detector (22-25) further includes a control unit which generates a signal of an amplitude of periodic change of the light together with a signal of the displacement and which monitors the signal of the amplitude and controls the modulator to make the signal of the amplitude to be constant.

21. The photoelectric encoder according to claim 10 or 11, wherein the displacement detector (22-25) further includes a control unit which generates a signal of a light amount of the illumination light beam together with a signal of the displacement and which monitors the signal of the light amount and controls the light source to make the signal of the light amount to be constant.

22. The photoelectric encoder according to claim 10 or 11, wherein the light-receiver (16) has a single light-receiving element.

**Patentansprüche**

1. Fotoelektrischer Kodierer mit:

einer Lichtquelle (11; 11'), die einen Lichtstrahl zu Beleuchtungszwecken abstrahlt;
einem beweglichen Gitter (15; 15'), das Gitterlinien hat und in einer die Gitterlinien schneidenden Richtung bewegbar ist;
einem Indexgitter (13; 13'), das als eine Referenz für die Bewegung des beweglichen Gitters dient;
einem Lichtempfänger (16), der den zur Beleuchtung dienenden Lichtstrahl über das bewegliche Gitter (15; 15') und das Indexgitter (13; 13') empfängt;
einem Modulator (17), der ein von dem Indexgitter (13) ausgehendes Licht periodisch ändert; und
einem Wegdetektor (22 - 25), der den Weg des beweglichen Gitters (15; 15') auf der Grundlage des zur Beleuchtung dienenden Lichtstrahls detektiert, der von dem Lichtempfänger (16) empfangen wird,
wobei der Modulator (17) dazu eingerichtet ist, eine relative Positionsbeziehung zwischen dem Indexgitter (13; 13') und dem zur Beleuchtung dienenden Lichtstrahl, der in das Indexgitter einläuft, periodisch zu modulieren,
**dadurch gekennzeichnet, dass**
der Modulator (17) periodisch eine Position des Indexgitters (11) verändert.

**2.** Fotoelektrischer Kodierer nach Anspruch 1, bei dem der Modulator (17) periodisch eine Position eines Projektionsbildes oder eines Gitterbildes des Indexgitters (13; 13') auf dem beweglichen Gitter (15; 15') verändert.

**3.** Fotoelektrischer Kodierer nach Anspruch 1, bei dem das bewegliche Gitter (15, 15') und das Indexgitter (13; 13') Beugungsgitter sind, und ein optisches System dazu eingerichtet ist, mit Hilfe eines Paares von gebeugten, von dem Indexgitter erzeugten Lichtstrahlen ein Gitterbild des Indexgitters auf dem beweglichen Gitter zu erzeugen.

**4.** Fotoelektrischer Kodierer nach Anspruch 3, bei dem das optische System ein reflektierendes Element (14A, 14B) aufweist, das die beiden gebeugten Lichtstrahlen jeweils so ablenkt, dass die gebeugten Lichtstrahlen des Paares sich in demselben Gebiet auf dem beweglichen Gitter (15; 15') überlagern.

**5.** Fotoelektrischer Kodierer nach Anspruch 1, bei dem:

der Modulator (17) eine periodische Veränderung des Lichts vornimmt, mit einer Wellenform, in der Anstiege und Abfälle zueinander symmetrisch sind; und
der Wegdetektor (22 - 25) als ein Signal für den Weg eine bestimmte Frequenzkomponente einer zeitabhängigen Änderung einer Intensität des zur Beleuchtung dienenden Lichtstrahls extrahiert, der von dem Lichtempfänger (16) empfangen wird.

**6.** Fotoelektrischer Kodierer nach Anspruch 1, bei dem:

der Modulator (17) eine periodische Änderung des Lichts vornimmt, mit einer Wellenform, in der Anstiege und Abfälle zueinander asymmetrisch sind; und
der Wegdetektor (22 - 25) als ein Signal für den Weg eine Phase einer zeitabhängigen Änderung einer Intensität des zur Beleuchtung dienenden Lichtstrahls extrahiert, der von dem Lichtempfänger (16) empfangen wird.

**7.** Fotoelektrischer Kodierer nach Anspruch 1, bei dem der Bewegungsdetektor (22 - 25) weiterhin eine Steuereinheit enthält, die ein Signal einer Amplitude der periodischen Änderung des Lichts zusammen mit einem Signal für den Weg erzeugt und das Signal der Amplitude überwacht und den Modulator ansteuert, um das Signal der Amplitude konstant zu halten.

**8.** Fotoelektrischer Kodierer nach Anspruch 1, bei dem der Wegdetektor (22 - 25) weiterhin eine Steuereinheit enthält, die ein Signal für eine Lichtmenge des zur Beleuchtung dienenden Lichtstrahls zusammen mit einem Signal für den Weg erzeugt und die das Signal für die Lichtmenge überwacht und die Lichtquelle ansteuert, um das Signal für die Lichtmenge konstant zu halten.

**9.** Fotoelektrischer Kodierer nach Anspruch 1, bei dem der Lichtempfänger (16) ein einzelnes lichtempfangendes Element aufweist.

**10.** Fotoelektrischer Kodierer mit:

einer Lichtquelle (11; 11'), die einen zur Beleuchtung dienenden Lichtstrahl abstrahlt;
einem beweglichen Gitter (15; 15'), das Gitterlinien hat und in einer die Gittelinien schneidenden Richtung beweglich ist;
einem Indexgitter (13; 13'), das als eine Referenz für die Bewegung des beweglichen Gitters dient;
einem Lichtempfänger (16), der den zur Beleuchtung dienenden Lichtstrahl über das bewegliche Gitter (15, 15') und das Indexgitter (13; 13') empfängt;
einem Modulator (17), der ein von dem Indexgitter (13) ausgehendes Licht periodisch verändert; und
einem Wegdetektor (23 - 26), der den Weg des beweglichen Gitters (15; 15') auf der Grundlage des zur Beleuchtung dienenden, von dem Lichtempfänger (16) empfangenden Lichtstrahls detektiert,
**dadurch gekennzeichnet, dass** der Modulator (17) einen Aktuator aufweist, der die Lichtquelle (11; 11') bewegt, und der Modulator (17) dazu eingerichtet ist, eine relative Positionsbeziehung zwischen dem Indexgitter (13; 13') und dem in das Indexgitter einlaufenden, zur Beleuchtung dienenden Lichtstrahl periodisch zu modulieren.

**11.** Fotoelektrischer Kodierer mit:

einer Lichtquelle (11; 11'), die einen Lichtstrahl zu Beleuchtungszwecken abstrahlt;
einem beweglichen Gitter (15; 15'), das Gitterlinien hat und in einer die Gitterlinien schneidenden Richtung beweglich ist;
einem Indexgitter (13; 13') das als eine Referenz für die Bewegung des beweglichen Gitters dient;
einem Lichtempfänger (16), der den zur Beleuchtung dienenden Lichtstrahl über das bewegliche Gitter (15; 15') und das Indexgitter (13; 13') empfängt;
einem Modulator (17), der ein von dem Indexgitter (13) ausgehendes Licht periodisch ändert; und
einem Wegdetektor (23 - 26), der die Bewegung des beweglichen Gitters (15; 15') auf der Grundlage des zur Beleuchtung dienenden und von dem Lichtempfänger (16) empfangenen Lichtstrahls detektiert, **dadurch gekennzeichnet, dass** die Lichtquelle (11') eine Punktlichtquellen-Anordnung hat, der Modulator (17) die Punktlichtquellen-Anordnung ansteuert, und der Modulator (17) dazu eingerichtet ist, eine relative Positionsbeziehung zwischen dem Indexgitter (13; 13') und dem in das Indexgitter einlaufenden, zur Beleuchtung dienenden Lichtstrahl periodisch zu modulieren.

12. Fotoelektrischer Kodierer nach Anspruch 10 oder 11, bei dem der Modulator einen Winkel des von der Lichtquelle (11; 11') in das Indexgitter (13') oder das bewegliche Gitter (15') abgestrahlten, zur Beleuchtung dienenden Lichtstrahls periodisch verändert.

13. Fotoelektrischer Kodierer nach Anspruch 12, bei dem die Lichtquelle (11) in der Lage ist, das zur Beleuchtung dienende Licht als eine Vielzahl von zur Beleuchtung dienenden Lichtstrahlen abzustrahlen, die voneinander verschiedene Winkel haben, und der Modulator die mehreren zur Beleuchtung dienenden Lichtstrahlen periodisch schaltet.

14. Fotoelektrischer Kodierer nach Anspruch 10 oder 11, bei dem der Modulator (17) eine Position eines Projektionsbildes oder eines Gitterbildes des Indexgitters (13; 13') auf dem beweglichen Gitter (15; 15') periodisch verändert.

15. Fotoelektrischer Kodierer nach Anspruch 10 oder 11, bei dem das bewegliche Gitter (15; 15') und das Indexgitter (13; 13') Beugungsgitter sind, und ein optisches System dazu eingerichtet ist, mit Hilfe eines Paares von gebeugten Lichtstrahlen, die von dem Indexgitter erzeugt werden, ein Gitterbild des Indexgitters auf dem beweglichen Gitter zu erzeugen.

16. Fotoelektrischer Kodierer nach Anspruch 15, bei dem das optische System ein reflektierendes Element (14A; 14B) aufweist, das die beiden gebeugten Lichtstrahlen jeweils so ablenkt, dass sich die gebeugten Lichtstrahlen des Paares in demselben Gebiet auf dem beweglichen Gitter (15; 15') überlagern.

17. Fotoelektrischer Kodierer nach Anspruch 15 oder 16, bei dem der Modulator (17) eine Phasendifferenz zwischen den beiden gebeugten Lichtstrahlen periodisch verändert.

18. Fotoelektrischer Kodierer nach Anspruch 10 oder 11, bei dem
der Modulator (17) eine periodische Änderung des Lichts vornimmt, mit einer Wellenform, in der Anstiege und Abfälle symmetrisch zueinander sind; und
der Bewegungsdetektor (22 - 25) als ein Signal für die Bewegung eine bestimmte Frequenzkomponente einer zeitabhängigen Änderung einer Intensität des von dem Lichtempfänger (16) empfangenen, zur Beleuchtung dienenden Lichtstrahls extrahiert.

19. Fotoelektrischer Kodierer nach Anspruch 10 oder 11, bei dem:

der Modulator (17) eine periodische Änderung des Lichts vornimmt, mit einer Wellenform, in der Anstiege und Abfälle asymmetrisch zueinander sind, und
der Bewegungsdetektor (22) als ein Signal für den Weg eine Phase einer zeitabhängigen Änderung einer Intensität des von dem Lichtempfänger (16) empfangenen, zur Beleuchtung dienenden Lichtstrahls extrahiert.

20. Fotoelektrischer Kodierer nach Anspruch 10 oder 11, bei dem der Bewegungsdetektor (22 - 25) weiterhin eine Steuereinheit enthält, die ein Signal einer Amplitude der periodischen Änderung des Lichts zusammen mit einem Signal für den Weg erzeugt und die das Signal der Amplitude überwacht und den Modulator ansteuert, um das Signal der Amplitude konstant zu halten.

21. Fotoelektrischer Kodierer nach Anspruch 10 oder 11, bei dem der Wegdetektor (22 - 25) weiterhin eine Steuereinheit enthält, die ein Signal für eine Lichtmenge des zur Beleuchtung dienenden Lichtstrahls zusammen mit einem Signal für den Weg erzeugt und die das Signal für die Lichtmenge überwacht und die Lichtquelle ansteuert, um das Signal für die Lichtmenge konstant zu halten.

**22.** Fotoelektrischer Kodierer nach Anspruch 10 oder 11, bei dem der Lichtempfänger (16) ein einzelnes lichtempfangendes Element aufweist.

**Revendications**

**1.** Encodeur photoélectrique comportant :

une source de lumière (11 ; 11') qui irradie un faisceau de lumière d'illumination,
un réseau mobile (15 ; 15') qui a des lignes de réseau et qui est déplaçable dans une direction intersectant les lignes de réseau,
un réseau d'index (13 ; 13') qui sert de référence pour le déplacement du réseau mobile,
un récepteur de lumière (16) qui reçoit le faisceau de lumière d'illumination via le réseau mobile (15 ; 15') et le réseau d'index (13 ; 13'),
un modulateur (17) qui change périodiquement une lumière sortante du réseau d'index (13), et
un détecteur de déplacement (22 - 25) qui détecte le déplacement du réseau mobile (15 ; 15') sur la base du faisceau de lumière d'illumination reçu par le récepteur de lumière (16),
dans lequel le modulateur (17) est agencé pour moduler périodiquement une relation de position relative entre le réseau d'index (13 ; 13') et le faisceau de lumière d'illumination entrant dans le réseau d'index, **caractérisé en ce que**
le modulateur (17) change périodiquement une position du réseau d'index (11).

**2.** Encodeur photoélectrique selon la revendication 1, dans lequel le modulateur (17) change périodiquement une position de l'une d'une image de projection et d'une image de réseau du réseau d'index (13 ; 13') sur le réseau mobile (15 ; 15').

**3.** Encodeur photoélectrique selon la revendication 1, dans lequel chacun du réseau mobile (15 ; 15') et du réseau d'index (13 ; 13') est un réseau de diffraction, et un système optique est agencé pour former une image de réseau du réseau d'index sur le réseau mobile par une paire de faisceaux de lumière diffractée générés par le réseau d'index.

**4.** Encodeur photoélectrique selon la revendication 3, dans lequel le système optique comprend un élément de réflexion (14A, 14B) qui dévie la paire de faisceaux de lumière diffractée respectivement de manière à recouvrir la paire de faisceaux de lumière diffractée dans une même zone sur le réseau mobile (15 ; 15').

**5.** Encodeur photoélectrique selon la revendication 1, dans lequel :

le modulateur (17) exécute un changement périodique de la lumière avec une forme d'onde dans laquelle la montée et la descente sont symétriques l'une de l'autre, et
le détecteur de déplacement (22 - 25) extrait, en tant que signal du déplacement, une composante de fréquences spécifiée de changement en fonction du temps d'une intensité du faisceau de lumière d'illumination reçu par le récepteur de lumière (16).

**6.** Encodeur photoélectrique selon la revendication 1, dans lequel :

le modulateur (17) exécute un changement périodique de la lumière à l'aide d'une forme d'onde dans laquelle la montée et la descente sont asymétriques l'une de l'autre, et
le détecteur de déplacement (22 - 25) extrait, en tant que signal du déplacement, une phase de changement en fonction du temps d'une intensité du faisceau de lumière d'illumination reçu par le récepteur de lumière (16).

**7.** Encodeur photoélectrique selon la revendication 1, dans lequel le détecteur de déplacement (22 - 25) comprend en outre une unité de commande qui génère un signal d'une amplitude de changement périodique de la lumière conjointement avec un signal du déplacement et qui surveille le signal de l'amplitude et commande le modulateur pour rendre constant le signal de l'amplitude.

**8.** Encodeur photoélectrique selon la revendication 1, dans lequel le détecteur de déplacement (22 - 25) comprend en outre une unité de commande qui génère un signal d'une quantité de lumière du faisceau de lumière d'éclairage conjointement avec un signal du déplacement et qui surveille le signal de la quantité de lumière et commande la source de lumière pour rendre constant le signal de la quantité de lumière.

9. Encodeur photoélectrique selon la revendication 1, dans lequel le récepteur de lumière (16) a un unique élément de réception de lumière.

10. Encodeur photoélectrique comportant :

une source de lumière (11 ; 11') qui irradie un faisceau de lumière d'illumination,
un réseau mobile (15 ; 15') qui dispose de lignes de réseau et qui est déplaçable dans une direction intersectant les lignes de réseau,
un réseau d'index (13 ; 13') qui sert de référence pour le déplacement du réseau mobile,
un récepteur de lumière (16) qui reçoit le faisceau de lumière d'illumination via le réseau mobile (15 ; 15') et le réseau d'index (13 ; 13'),
un modulateur (17) qui change périodiquement une lumière sortante du réseau d'index (13), et
un détecteur de déplacement (23 - 26) qui détecte le déplacement du réseau mobile (15 ; 15') sur la base du faisceau de lumière d'illumination reçu par le récepteur de lumière (16),
**caractérisé en ce que** le modulateur (17) dispose d'un actionneur qui actionne la source de lumière (11, 11'), et le modulateur (17) est agencé pour moduler périodiquement une relation de position relative entre le réseau d'index (13 ; 13') et le faisceau de lumière d'illumination entrant dans le réseau d'index.

11. Encodeur photoélectrique comportant :

une source de lumière (11 ; 11') qui irradie un faisceau de lumière d'illumination,
un réseau mobile (15 ; 15') qui dispose de lignes de réseau et qui est déplaçable dans une direction intersectant les lignes de réseau,
un réseau d'index (13 ; 13') qui sert de référence pour le déplacement du réseau mobile,
un récepteur de lumière (16) qui reçoit le faisceau de lumière d'illumination via le réseau mobile (15 ; 15') et le réseau d'index (13 ; 13'),
un modulateur (17) qui change périodiquement une lumière sortante du réseau d'index (13), et
un détecteur de déplacement (23 - 26) qui détecte le déplacement du réseau mobile (15 ; 15') sur la base du faisceau de lumière d'illumination reçu par le récepteur de lumière (16),
**caractérisé en ce que** la source de lumière (11') a une grille de points de source de lumière, le modulateur (17) entraîne la grille de points de source de lumière, et le modulateur (17) est agencé pour moduler périodiquement une relation de position relative entre le réseau d'index (13 ; 13') et le faisceau de lumière d'illumination entrant dans le réseau d'index.

12. Encodeur photoélectrique selon la revendication 10 ou 11, dans lequel le modulateur change périodiquement un angle du faisceau de lumière d'illumination du faisceau de lumière d'illumination irradié par la source de lumière (11 ; 11') dans l'un du réseau d'index (13') et du réseau mobile (15').

13. Encodeur photoélectrique selon la revendication 12, dans lequel la source de lumière (11') est capable d'irradier le faisceau de lumière d'illumination sous forme d'une pluralité de faisceaux de lumière d'illumination ayant des angles mutuellement différents, et le modulateur commute périodiquement la pluralité de faisceaux de lumière d'illumination.

14. Encodeur photoélectrique selon la revendication 10 ou 11, dans lequel le modulateur (17) change périodiquement une position de l'une d'une image de projection et d'une image de réseau du réseau d'index (13 ; 13') sur le réseau mobile (15 ; 15').

15. Encodeur photoélectrique selon la revendication 10 ou 11, dans lequel chacun du réseau mobile (15 ; 15') et du réseau d'index (13 ; 13') est un réseau de diffraction, et un système optique est conçu pour former une image de réseau du réseau d'index sur le réseau mobile par une paire de faisceaux de lumière diffractée générés par le réseau d'index.

16. Encodeur photoélectrique selon la revendication 15, dans lequel le système optique comprend un élément de réflexion (14A ; 14B) qui dévie la paire de faisceaux de lumière diffractée respectivement de manière à recouvrir la paire de faisceaux de lumière diffractée dans une même zone sur le réseau mobile (15 ; 15').

**17.** Encodeur photoélectrique selon la revendication 15 ou 16, dans lequel le modulateur (17) change périodiquement une différence de phase entre la paire de faisceaux de lumière diffractée.

**18.** Encodeur photoélectrique selon la revendication 10 ou 11, dans lequel :

le modulateur (17) exécute un changement périodique de la lumière à l'aide d'une forme d'onde dans laquelle la montée et la descente sont symétriques l'une de l'autre, et
le détecteur de déplacement (22 - 25) extrait, en tant que signal du déplacement, une composante de fréquence spécifiée de changement en fonction du temps d'une intensité du faisceau de lumière d'illumination reçu par le récepteur de lumière (16).

**19.** Encodeur photoélectrique selon la revendication 10 ou 11, dans lequel :

le modulateur (17) exécute un changement périodique de la lumière à l'aide d'une forme d'onde dans laquelle la montée et la descente sont mutuellement asymétriques, et
le détecteur de déplacement (22 - 25) extrait, en tant que signal du déplacement, une phase de changement en fonction du temps d'une intensité du faisceau de lumière d'illumination reçu par le récepteur de lumière (16).

**20.** Encodeur photoélectrique selon la revendication 10 ou 11, dans lequel le détecteur de déplacement (22 - 23) comprend en outre une unité de commande qui génère un signal d'une amplitude de changement périodique de la lumière conjointement avec un signal du déplacement et qui surveille le signal de l'amplitude et commande le modulateur pour rendre constant le signal de l'amplitude.

**21.** Encodeur photoélectrique selon la revendication 10 ou 11, dans lequel le détecteur de déplacement (22 - 25) comprend en outre une unité de commande qui génère un signal d'une quantité de lumière du faisceau de lumière d'illumination conjointement avec un signal du déplacement et qui surveille le signal de la quantité de lumière et commande la source de lumière pour rendre constant le signal de la quantité de lumière.

**22.** Encodeur photoélectrique selon la revendication 10 ou 11, dans lequel le récepteur de lumière (16) dispose d'un unique élément de réception de lumière.

## Fig. 1

LIGHT AMOUNT CONTROL CIRCUIT — 32

LIGHT SOURCE DRIVING CIRCUIT — 30

ZERO-ORDER COMPONENT DETECTION CIRCUIT — 31

ACTUATOR DRIVING CIRCUIT — 29

MODULATION FACTOR CONTROL CIRCUIT — 28

CLOCK CIRCUIT — 26

1ST-ORDER COMPONENT DETECTION CIRCUIT — 22

2ND-ORDER COMPONENT DETECTION CIRCUIT — 23

3RD-ORDER COMPONENT DETECTION CIRCUIT — 24

4TH-ORDER COMPONENT DETECTION CIRCUIT — 25

LIGHT-RECEIVING CIRCUIT — 21

ENCODER SIGNAL PROCESSING CIRCUIT — 27

$I_1$

$I_2$

$I$

ENCODER OUTPUT

11
12
17
13
14B
14A
15
16

DIRECTION OF MOVEMENT

Z
Y
X

EP 1 826 535 B1

Fig. 2

Fig. 3

(a)          (b)          (c)          (d)          (e)

X=-81°       X=-36°       X=0°         X=+36°       X=+81°

EP 1 826 535 B1

## Fig. 4

$\sin \omega t$

22(1ST-ORDER COMPONENT DETECTION CIRCUIT)

$I_1$

LPF

TO MODULATION FACTOR CONTROL CIRCUIT

$\cos 2\omega t$

$I$

FROM LIGHT-RECEIVING CIRCUIT

23(2ND-ORDER COMPONENT DETECTION CIRCUIT)

$I_2$

LPF

TO ENCODER SIGNAL PROCESSING CIRCUIT

EP 1 826 535 B1

# Fig. 5

(a)

(b)

# Fig. 6

LIGHT AMOUNT CONTROL CIRCUIT — 32

LIGHT SOURCE DRIVING CIRCUIT — 30

ZERO-ORDER COMPONENT DETECTION CIRCUIT — 31

ACTUATOR DRIVING CIRCUIT — 29

SAWTOOTH WAVE-GENERATING CIRCUIT — 40

MODULATION FACTOR CONTROL CIRCUIT — 28

ENCODER SIGNAL PROCESSING CIRCUIT — 27

LIGHT-RECEIVING CIRCUIT — 21

ENCODER OUTPUT

11 12 13 17 14B 14A 15 16

Z Y X

EP 1 826 535 B1

Fig. 7

(a)                    (b)                    (c)

X=-81°                X=-36°                X=0°

Fig. 8

# Fig. 9

# Fig. 10

# Fig. 11

(a)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3756723 A

- JP 2002243503 A